# EUROPEAN PATENT APPLICATION

(11) **EP 2 453 400 A1**
(43) Date of publication of application: **16.05.2012**
(21) Application number: 11188554.7
(22) Date of filing: 10.11.2011
(51) Int. Cl.: G06Q 20/00, G06F 21/00

(54) **Secure payment mechanism**

(30) Priority: 10.11.2010 SE 1051185
(71) Applicant: Precise Biometrics AB, 220 07 Lund (SE)
(72) Inventor: Andersson, Jonas, SE-236 42 Höllviken (SE)
(74) Representative: Ström & Gulliksson AB

(57) **Abstract**

A processing device of a user, comprising a user interface, processing capability, a biometric reader, and a connection to the Internet, configured to acquire biometric data from the user by the biometric reader, transmit a claim to a payment server, via the Internet, that a payment should be executed, receive an authentication request form from the payment server via the Internet, forward the authentication request form together with identification data including a representation of the biometric data to an identity provider, IdP, server via the Internet, receive an authentication reply form from the IdP server, and forward the authentication reply form to the payment server is disclosed.

## Description

### Technical field

The present invention generally relates to a processing device, a identity provider server, and methods and computer programs therefore.

### Background

Payment mechanisms for Internet shopping and the like normally include the process of check-out for concluding the buy. At the end of a selection of products for purchase, the client finds himself with a virtual shopping cart where the products, volumes etc. are listed. With this information available he will select to complete the purchase through payment. Normally this will take him to a payment page where he can select payment method, which may be different depending on payment actors providing their payment processes, which are intended to be secure enough to avoid fraud. Some payment actors have introduced certain payment processes in order to expedite the flow. Some payment processes combines the confirmation of purchase and payment with the selection of the particular payment method. Still, the customer has to check into the service provided by the payment actor, present username, which may be pre-filled through cookie information in the browser, and present a password or other secret information in order to execute the payment, and finally review the total payment and terms and again confirm his willingness to pay, e.g. through the clicking of a virtual "button" on the screen.

The ability to provide secure payment at Internet shopping and the like has greatly improved business, but issues in sense of smoothness in operation still remain. Examples on such issues are that multiple pages need to load, which may be time consuming and imply a possibility of transfer errors, that multiple and diverse end user actions are requested requiring the change of posture, focus and motor skills, which may be experienced by the user as uncertain and out of control such that the complexity and delay transforms into attrition which imply that the customer fails to complete the transaction, and that the user needs to remember the password or secret information to be provided. The latter often implies lack of security if the user needs to keep the password on a note or use the computer to remember it.

It is therefore a need to provide a secure payment mechanism solution for Internet shopping and the like.

### Summary

An object of the invention is to at least alleviate the above stated problem.

According to a first aspect, there is provided a processing device of a user, comprising a user interface, processing capability, a biometric reader, and a connection to the Internet, configured to acquire biometric data from the user by the biometric reader, transmit a claim to a payment server, via the Internet, that a payment should be executed, receive an authentication request form from the payment server via the Internet, forward the authentication request form together with identification data including a representation of the biometric data to an identity provider, IdP, server via the Internet, receive an authentication reply form from the IdP server, and forward the authentication reply form to the payment server.

The processing device may be further configured to receive a confirmation about performed payment from the payment server, and present information of the confirmation to the user via the user interface.

The processing device may be a personal computer or a mobile phone. The biometric reader may be a fingerprint reader.

According to a second aspect, there is provided an identity provider, IdP, server comprising processing capability, a biometric matcher, and a connection to the Internet, configured to receive an authentication request form and identification data from a remote processing device of a user, where in the identification data comprises a biometric sample acquired from the user, perform a biometric matching procedure by the biometric matcher, where the received biometric data is compared with biometric data stored in, or accessible by, the IdP server, generate an authentication reply form, if there is a match between the received biometric data and the stored or accessed biometric data for the person indicated by the received identification data, which authentication reply form indicates authenticity of the user, and send the authentication reply form to the remote processing device.

According to a third aspect, there is provided a method for a secure payment mechanism of a processing device of a user, the method comprising acquiring a biometric sample from the user; transmitting a claim to a payment server indicating intention to make a particular payment; receiving an authentication request form from the payment server; sending the request form, together with user identification and a representation of the biometric sample to an identity provider, IdP, server, to which the user is previously registered; receiving an authentication reply form from the IdP server, if there is a match at the IdP server between the biometric sample and a registered biometric template; and sending the authentication reply form to the payment server.

The method may further comprise receiving a confirmation from the payment server; and presenting information of the confirmation to the user.

According to a fourth aspect, there is provided a method for an identity provider, IdP, server, comprising receiving an authentication request from a remote processing device of a user, the request comprising a request form and identification data of the user, wherein the identification data comprises a biometric sample acquired from the user; matching the biometric sample with a biometric sample associated with identification data of the user previously stored in, or accessible by, the IdP server; generating an authentication reply form, if there is a match, wherein the authentication reply form indicates authenticity of the user; and sending the authentication reply form to the remote processing device of the user.

According to a fifth aspect of the invention, there is a computer program comprising computer readable instructions causing a processor to perform the method according to the third aspect.

According to a sixth aspect of the invention, there is a computer program comprising computer readable instructions causing a processor to perform the method according to the fourth aspect.

Other objectives, features and advantages of the present invention will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings.
Fig. 1 is a signalling timing diagram according to an embodiment.
Fig. 2 is a signalling timing diagram according to an embodiment.
Fig. 3 is a flow chart for actions performed in a user's processing device.
Fig. 4 is a flow chart for actions performed in an identity provider server.
Fig. 5 is a flow chart for actions performed in a payment server.
Fig. 6 illustrates a computer readable medium for holding software, a processing device and its connection to the Internet.

### Detailed description of preferred embodiments

For the understanding of relevant elements included in the secure payment mechanism, a brief introduction to the main elements will be provided here.

An Identity provider (IdP) supply user information by an authentication and authorization infrastructure, e.g. based on Security Assertion Markup Language (SAML). This allows for information about users in one security domain to be provided to other organizations, such as Service Providers (SPs). This allows for cross-domain single sign-on and removes the need for SPs to maintain user names and passwords, i.e. the SPs consume this user information for enabling access to secure content. The IdP preferably provides its service through an IdP server.

A particular category of SP is in the context of the invention the payment actor. The payment actor provides an e-commerce business allowing payments and money transfers to be made through the Internet. The payment actor serves as an electronic alternative to traditional paper methods such as checks and money orders. A payment actor account can be funded with an electronic debit from a bank account or by a credit card. The recipient of a payment actor transfer can either request a check from the payment actor, establish their own payment actor deposit account, or request a transfer to their bank account. Recipients may not be able to use received funds without providing bank account or credit card information to the payment actor. The payment actor performs payment processing for online vendors, auction sites, and other commercial users, for which it may charge a fee. The payment actor sometimes also charges a transaction fee for receiving money, e.g. a percentage of the amount sent plus an additional fixed amount. The fees charged may depend on the currency used, the payment option used, the country of the sender, the country of the recipient, the amount sent and the recipient's account type. The payment actor preferably provides its service through a payment server.

A user in the context of the invention is acting through a processing device, e.g. a personal computer or a mobile phone, connected to the Internet. The processing device preferably has a browser for browsing the Internet. The processing device in the context of the invention also has, or is connected to, a biometric sensor, e.g. a fingerprint reader. The processing device is preferably also configured to communicate securely, e.g. by some type of encrypted and/or authenticated communication, with other entities on the Internet.

The basic idea of the invention is to provide a communication sequence between the user, the payment actor and the IdP for secure and easy handling of the payment. The communication sequence is performed by technical means of the entities, i.e. the processing device of the user, a payment server of the payment actor and an IdP server of the IdP, such that the user only experiences the act of confirmation by providing biometric data and then receives a confirmation that the transaction is ready and the goods will be shipped. Here, some communications between the entities are common for the different embodiments demonstrated below. One of them is the provision of identification data from the user to the IdP, which identification data comprises biometric data to prove the identity of the user. Another one is authorisation data from the IdP in which the IdP provides tamperproof data indicating the authenticity. This data can be sent back to the user such that the processing device of the user forwards it to the payment actor, or be provided to the payment actor directly. The former alternative has the advantage that the processing device of the user normally already is in a session with the payment actor and the payment actor expects the data to be included in that session.

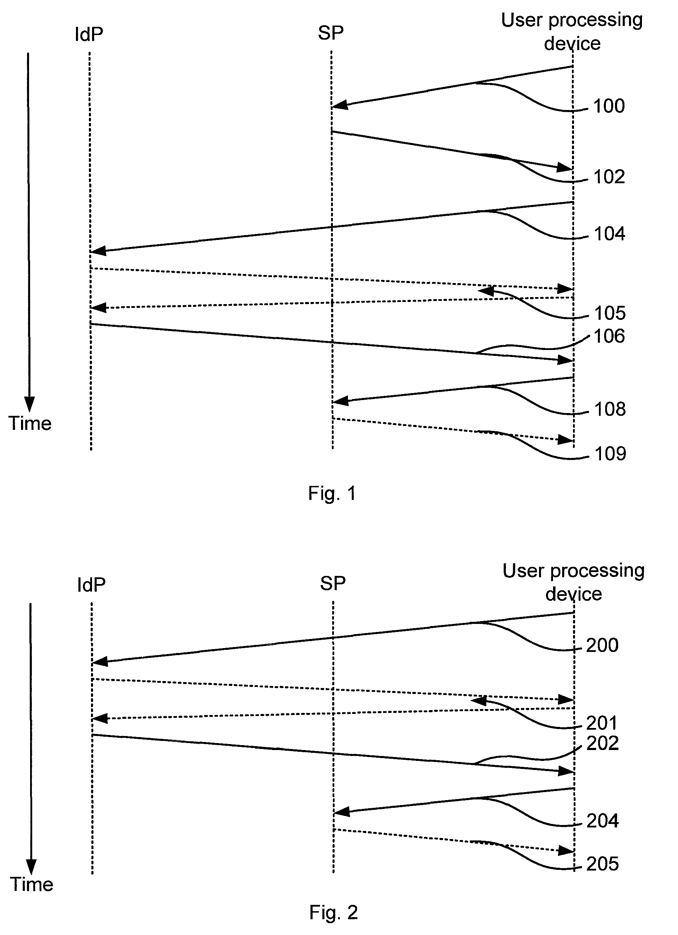

According to one embodiment, for which a schematic signalling scheme is provided in Fig. 1, the user' processing device provides a claim 100 to the payment actor that a payment should be executed. This can be done upon the user actuating a user interface item associated with this service, or preferably, when the user presents biometrics, e.g. puts a finger on a fingerprint sensor, to indicate his or her intention to perform the payment. The payment server of the payment actor then replies with a SAML request form 102. The processing device of the user then sends the SAML request form 104 and identification data, which includes data of the presented biometrics, to the IdP server. This communication between the processing device of the user and the IdP server can include one or more messages 105 sent to the IdP or between the processing device and the IdP server. The IdP server then, only if the identification data and the provided biometrics match, replies with a SAML reply form 106, in which authenticity of the user is provided, to the processing device. The processing device forwards the SAML reply form 108 to the payment server. The payment server then knows of the authenticity of the user and the user's intention to pay, wherein a final confirmation 109 can be sent to the processing device and the user can see that the payment will be performed and the goods will be shipped. Here, it can be seen that the IdP provides any necessary data for the SAML reply form and the only thing the user experiences is the provision of the biometrics, and then the final confirmation. The method is therefore very easy to use for the user and no passwords are needed to be remembered. At the same time, a high level of security is provided based on the biometric authentication. It should be noted that for capturing and digital representation of the biometrics, the transmission of the biometric data, e.g. encryption, and the biometric matching, standard procedures in the art are used.

Here, the processing device of the user is configured to acquire biometric data from a user, provide a claim to the payment server that a payment should be executed, receive a SAML request form from the payment server, forward the SAML request form together with identification data including biometric data acquired from the user to an IdP server, receive a SAML reply form the IdP server and forward the SAML reply form to the payment server. The processing device is also configured to receive a confirmation about the performed business and to present information thereon to the user.

The payment server is configured to receive a claim from a remote user processing device that payment should be performed, to prepare and send a SAML request form to the processing device of the user, and to receive a SAML reply form from the user. The payment server can also be configured to provide a final confirmation to the processing device of the user.

The IdP server is configured to receive a SAML request form and identification data from a remote processing device of a user. The identification data comprises biometrics acquired from the user, and the IdP server is configured to perform a matching procedure where the received biometric data is compared with biometric data stored in, or accessible by, the IdP server. The identification data from the user processing device to the IdP server may also contain a secret key, used in the server to decrypt the personal data stored therein, but not retained in the server, so as to make it impossible to access an end user's personal data and biometric data without said user requesting this verification from his personal processing device. If there is a match between the received biometric data and the stored or accessed biometric data for the person indicated by the received identification data, the IdP server generates a SAML reply form which indicates authenticity of the user and sends the SAML reply form to the processing device of the user.

For all the entities above, i.e. the payment server, the processing device of the user and the IdP server, they each comprise a processing device including a processor, memory and communication means for communicating with the Internet, and software causing the processing device to perform the functions the entity is configured to do. For the entity of the user, also a biometric reader is required, e.g. a fingerprint reader.

The embodiment is particularly suitable for the standard SAML 2.0. Although SAML is used in the example demonstrated above, any other equivalent approach for exchanging authentication and authorization data between security domains may be used with the above demonstrated principles.

According to another embodiment, for which a schematic signalling scheme is provided in Fig. 2, the user presents biometrics, e.g. puts a finger on a fingerprint sensor, to indicate his or her intention to perform one or more payments. The processing device of the user then sends identification data 200, which includes data of the presented biometrics, to the IdP server. This communication between the processing device of the user and the IdP server can include one or more messages 201 sent to the IdP or between the processing device and the IdP server. The IdP server then, if the identification data and the provided biometrics match, replies with authentication data 202 in which authenticity of the user is provided, to the processing device. The processing device then forwards the authentication data 204 to a payment server. The payment server then knows of the authenticity of the user and the user's intention to pay, wherein a final confirmation 205 can be sent to the processing device and the user can see that the payment will be performed and the goods will be shipped.

In the above demonstrated embodiments, a single biometric acquisition has been indicated. However, improved security can be achieved by acquisition of further biometrics, e.g. in the handshake with the IdP. Such further biometrics can be a reacquisition of a fingerprint, e.g. from another finger.

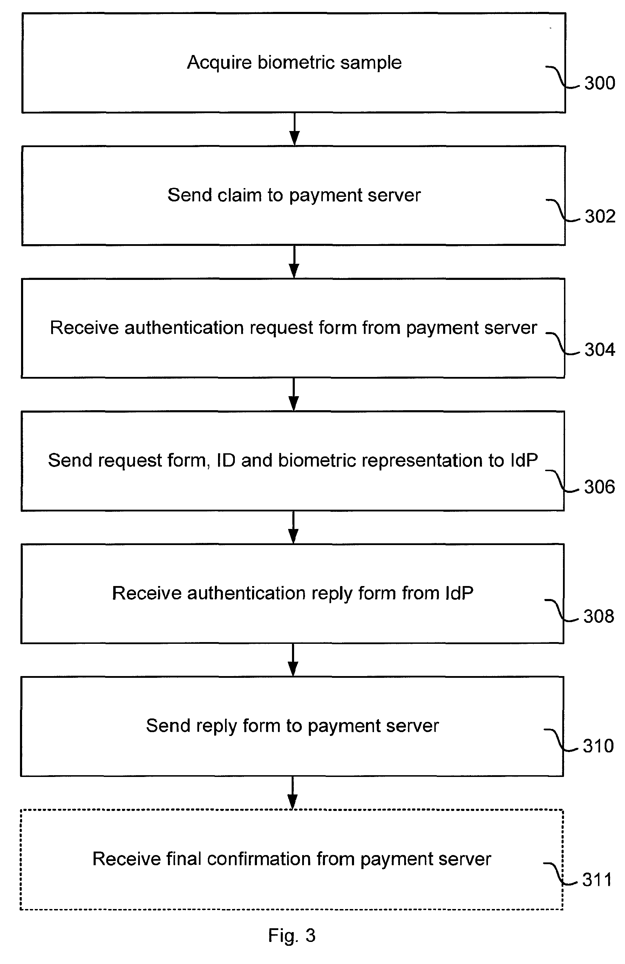

Fig. 3 illustrates a method for a secure payment mechanism of a processing device of a user. In a biometric sample acquisition step 300, a biometric sample is acquired, e.g. a fingerprint or finger vein sample. In a payment claim step 302, a claim is sent to a payment server indicating intention to make a particular payment. In response thereto, an authentication request form is received by the processing device in a request form reception step 304. The authentication request form can be according to the SAML standard, or other equivalent authentication approach. The request form, together with user identification and a representation of the biometric sample is sent to an IdP server, to which the user is previously registered, in a request form transmission step 306. An authentication reply form is received from the IdP server, if there is a proper match at the IdP of course, in a reply form reception step 308. The reply form is then sent to the payment server in a reply form transmission step 310. For convenience of the user, a final confirmation can be received from the payment server in a final confirmation step 311, and the processing device can present information accordingly to the user that payment will be performed and goods will be shipped.

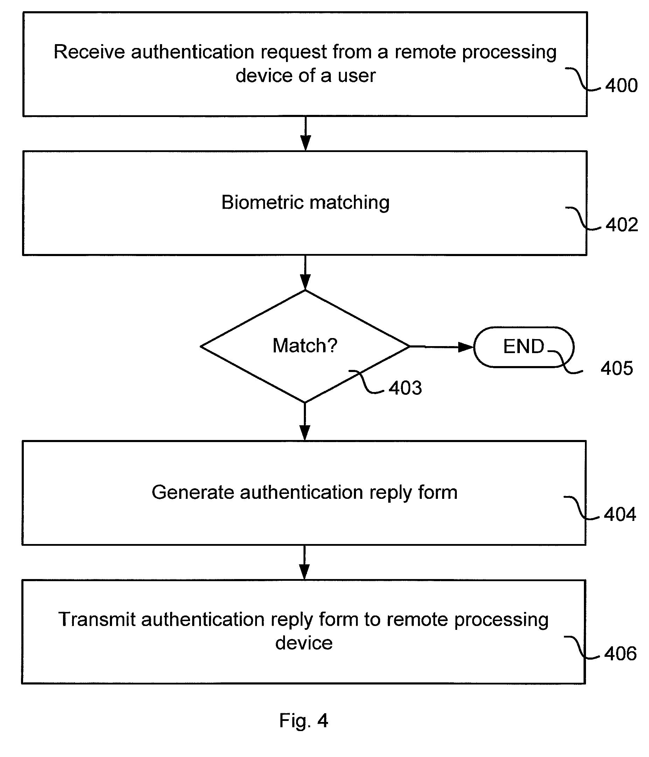

Fig. 4 illustrates a method of an IdP server. In an authentication request reception step 400, an authentication request is received from a remote processing device of a user. The request comprises a request form and identification data of the user. The identification data comprises biometrics acquired from the user. The user should be previously registered at the IdP, and biometric data should be stored in, or accessible by, the IdP server. In a matching step 402, and the IdP server performs a matching procedure where the received biometric data is compared with the biometric data stored in, or accessible by, the IdP server. If there is a match 403 between the received biometric data and the stored or accessed biometric data for the person indicated by the received identification data, the IdP server generates an authentication reply form in an authentication reply generation step 404. Else, no reply 405 is given. The authentication reply form indicates authenticity of the user. The IdP sends the authentication reply form to the processing device of the user in an authentication reply form transmission step 406.

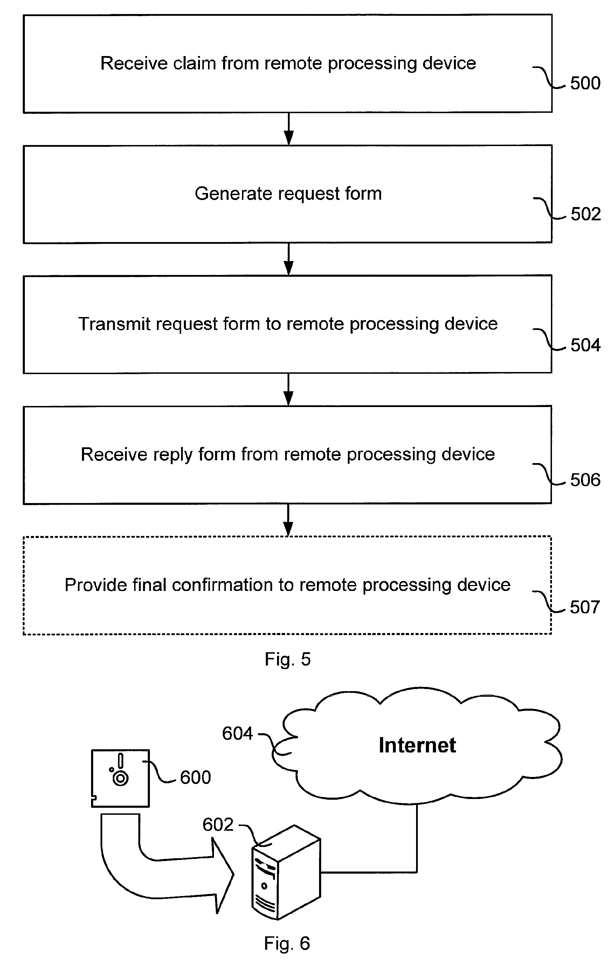

Fig. 5 illustrates a method of a payment server. The payment server receives a claim from a remote user processing device that payment should be performed in a claim reception step 500. The payment server prepares an authentication request form in a request form generation step 502. The payment server then sends the authentication request form to the processing device of the user in a request form transmission step 504. The payment server receives an authentication reply form from the user in a reply form reception step 506. The payment server can also provide a final confirmation to the processing device of the user in a final confirmation step 507. The provision of the final confirmation can comprise generation of the final confirmation, including particulars about the payment and its purpose, and then transmitting the final confirmation to the processing device of the user.

This approach is particularly suitable for Internet portals where common authentication is provided for the items within the portal. The embodiment is particularly suitable for the standard SAML 1.X, where X can be 0, 1 or 2. Although SAML is used in the example demonstrated above, any other equivalent approach for exchanging authentication and authorization data between security domains may be used with the above demonstrated principles.

The methods according to the present invention are suitable for implementation with aid of processing means, such as computers and/or processors, as have been indicated above. Therefore, there is provided computer programs, comprising instructions arranged to cause the processing means, processor, or computer to perform the steps of any of the methods according to any of the embodiments described with reference to Figs 4 to 5. The computer programs preferably comprises program code which is stored on a computer readable medium 600, as illustrated in Fig. 6, which can be loaded and executed by a processing means, processor, or computer 602 to cause it to perform the methods, respectively, according to embodiments of the present invention, preferably as any of the embodiments described with reference to Fig. 6. The computer 602 and computer program product 600 can be arranged to execute the program code sequentially where actions of the any of the methods are performed stepwise. The processing means, processor, or computer 602 is preferably what normally is referred to as an embedded system. Thus, the depicted computer readable medium 600 and computer 602 in Fig. 6 should be construed to be for illustrative purposes only to provide understanding of the principle, and not to be construed as any direct illustration of the elements. Fig. 6 also indicates the connection of the processing means, processor or computer to the Internet 604.

In the drawings, options are generally illustrated with hashed lines. The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A processing device of a user, comprising a user interface, processing capability, a biometric reader, and a connection to the Internet, configured to
acquire biometric data from the user by the biometric reader, and then transmit a claim (100) to a payment server, via the Internet, that a payment should be executed,
receive an authentication request form (102) from the payment server via the Internet,
forward the authentication request form (104) together with identification data (200) including a representation of the biometric data to an identity provider, IdP, server via the Internet,
receive an authentication (202) reply form (106) from the IdP server, and forward the authentication (204) reply form (108) to the payment server,
such that the user only experiences the act of confirmation by providing biometric data and then receives a confirmation that the transaction is ready.

2. The processing device according to claim 1, further configured to
receive a confirmation (109, 205) about performed payment from the payment server, and
present information of the confirmation to the user via the user interface.

3. The processing device according to claim 1 or 2, being a personal computer or a mobile phone.

4. The processing device according to any of claims 1 to 3, wherein the biometric reader is a fingerprint reader.

5. An identity provider, IdP, server comprising processing capability, a biometric matcher, and a connection to the Internet, configured to
receive an authentication (200) request form (104) and identification data from a remote processing device of a user, wherein the identification data comprises a biometric sample acquired from the user,
perform a biometric matching procedure by the biometric matcher, where the received biometric data is compared with biometric data stored in, or accessible by, the IdP server,
generate an authentication reply form, if there is a match between the received biometric data and the stored or accessed biometric data for the person indicated by the received identification data, which authentication reply form indicates authenticity of the user, and
send the authentication (202) reply form (106) to the remote processing device.

6. A method for a secure payment mechanism of a processing device of a user, the method comprising
acquiring (300) a biometric sample from the user;
transmitting (302) a claim to a payment server indicating intention to make a particular payment;
receiving (304) an authentication request form from the payment server; sending the request form, together with user identification and a representation of the biometric sample to an identity provider, IdP, server, to which the user is previously registered;
receiving (308) an authentication reply form from the IdP server, if there is a match at the IdP server between the biometric sample and a registered biometric template
sending (310) the authentication reply form to the payment server,
such that the user only experiences the act of confirmation by providing biometric data and then receives a confirmation that the transaction is ready.

7. The method according to claim 6, further comprising
receiving (311) a confirmation from the payment server; and
presenting information of the confirmation to the user.

8. A method for an identity provider, IdP, server, comprising
receiving (400) an authentication request from a remote processing device of a user, the request comprising a request form and identification data of the user, wherein the identification data comprises a biometric sample acquired from the user;
matching (402) the biometric sample with a biometric sample associated with identification data of the user previously stored in, or accessible by, the IdP server;
generating (404) an authentication reply form, if there is a match (403),
wherein the authentication reply form indicates authenticity of the user; and
sending (406) the authentication reply form to the remote processing device of the user.

9. A computer program comprising computer executable code which when executed by a processor causes the processor to perform the method according to claim 6 or 7.

10. A computer program comprising computer executable code which when executed by a processor causes the processor to perform the method according to claim 8.

## Amended claims

### Amended claims in accordance with Rule 137(2) EPC.

**1.** A processing device of a user, comprising a user interface, processing capability, a biometric reader, and a connection to the Internet,
**characterised by** being configured to
acquire biometric data from the user by the biometric reader, and then transmit a claim (100) to a payment server, via the Internet, that a payment should be executed,
receive an authentication request form (102) from the payment server via the Internet,
forward the authentication request form (104) together with identification data (200) including a representation of the biometric data to an identity provider, IdP, server via the Internet,
receive an authentication (202) reply form (106) from the IdP server, and forward the authentication (204) reply form (108) to the payment server,
such that the user only experiences the act of confirmation by providing biometric data and then receives a confirmation that the transaction is ready.

**2.** The processing device according to claim 1, further configured to
receive a confirmation (109, 205) about performed payment from the payment server, and
present information of the confirmation to the user via the user interface.

**3.** The processing device according to claim 1 or 2, being a personal computer or a mobile phone.

**4.** The processing device according to any of claims 1 to 3, wherein the biometric reader is a fingerprint reader.

**5.** An identity provider, IdP, server comprising processing capability, a biometric matcher, and a connection to the Internet,
**characterised by** being configured to
receive an authentication (200) request form (104) and identification data from a remote processing device of a user, wherein the identification data comprises a biometric sample acquired from the user,
perform a biometric matching procedure by the biometric matcher, where the received biometric data is compared with biometric data stored in, or accessible by, the IdP server,
generate an authentication reply form, if there is a match between the received biometric data and the stored or accessed biometric data for the person indicated by the received identification data, which authentication reply form indicates authenticity of the user, and
send the authentication (202) reply form (106) to the remote processing device.

**6.** A method for a secure payment mechanism of a processing device of a user, the method comprising
acquiring (300) a biometric sample from the user;
and then
transmitting (302) a claim to a payment server indicating intention to make a particular payment;
receiving (304) an authentication request form from the payment server; sending the request form, together with user identification and a representation of the biometric sample to an identity provider, IdP, server, to which the user is previously registered;
receiving (308) an authentication reply form from the IdP server, if there is a match at the IdP server between the biometric sample and a registered biometric template
sending (310) the authentication reply form to the payment server,
such that the user only experiences the act of confirmation by providing biometric data and then receives a confirmation that the transaction is ready.

**7.** The method according to claim 6, further comprising
receiving (311) a confirmation from the payment server; and
presenting information of the confirmation to the user.

**8.** A method for an identity provider, IdP, server, comprising
receiving (400) an authentication request from a remote processing device of a user, the request comprising a request form and identification data of the user, wherein the identification data comprises a biometric sample acquired from the user;
matching (402) the biometric sample with a biometric sample associated with identification data of the user previously stored in, or accessible by, the IdP server;
generating (404) an authentication reply form, if there is a match (403),
wherein the authentication reply form indicates authenticity of the user; and
sending (406) the authentication reply form to the remote processing device of the user.

**9.** A computer program comprising computer executable code which when executed by a processor causes the processor to perform the method according to claim 6 or 7.

**10.** A computer program comprising computer executable code which when executed by a processor causes the processor to perform the method according to claim 8.
